# EUROPÄISCHE PATENTSCHRIFT

(11) **EP 1 421 354 B1**
(45) Veröffentlichungstag und Bekanntmachung des Hinweises auf die Patenterteilung: **07.04.2010**
(21) Anmeldenummer: 02794595.5
(22) Anmeldetag: 09.08.2002
(51) Int. Cl.: G01L 3/10

(54) **BERÜHRUNGSLOSES MESSEN VON BEANSPRUCHUNGEN ROTIERENDER TEILE**
CONTACTLESS MEASUREMENT OF THE STRESS OF ROTATING PARTS
MESURE SANS CONTACT DE CONTRAINTES SUR DES PIECES ROTATIVES

(30) Priorität: 11.08.2001 DE 10139659; 04.06.2002 DE 10224792
(43) Veröffentlichungstag der Anmeldung: 26.05.2004
(73) Patentinhaber: Fraunhofer-Gesellschaft zur Förderung der angewandten Forschung e.V., 80686 München (DE)
(72) Erfinder: BERNHARD, Josef, 91052 Erlangen (DE); HERING, Joachim, 97078 Wuerzburg (DE); WANSCH, Rainer, 91056 Erlangen (DE); GEMPPER, Sven, 97332 Volkach (DE); STRAUSS, Wolfram, 91058 Erlangen (DE)
(74) Vertreter: Fricke, Joachim
(86) Internationale Anmeldenummer: PCT/EP2002/008957
(87) Internationale Veröffentlichungsnummer: WO 2003/014686

(56) Entgegenhaltungen:
- EP-A- 1 026 492
- POHL A ET AL: "WIRELESSLY INTERROGABLE SURFACE ACOUSTIC WAVE SENSORS FOR VEHICULAR APPLICATIONS" IEEE TRANSACTIONS ON INSTRUMENTATION AND MEASUREMENT, IEEE INC. NEW YORK, US, Bd. 46, Nr. 4, 1. August 1997 (1997-08-01), Seiten 1031-1038, XP000738868 ISSN: 0018-9456

## Beschreibung

Die Erfindung befaßt sich mit einem Verfahren zur Messung z.B. thermischer oder mechanischer Beanspruchungen (oder Belastungen) eines rotierenden Teils, das in einem im wesentlichen geschlossenen metallischen Gehäuse gelagert ist. Bevorzugt werden solche rotierenden Teile angesprochen, die auf einem Wälzlager gelagert sind, beispielsweise Wellen. Die Erfindung befaßt sich auch mit einer Vorrichtung, mit der eine solche Messung möglich ist, wobei ein vom mit der Welle drehenden Sensor (auch: passiver Sender) reflektiertes Reflektionssignal von Antennen empfangen wird, die es in ein Empfangssignal umsetzen, das zur Erfassung oder Bestimmung (Messung) der auf dem drehbaren Teil herrschenden Beanspruchung ausgewertet wird.

Oberflächenwellen-Sensoren, z.B. sogenannte SAW-Sensoren, können als Meßgeber auf einem rotierenden Teil eines Lagers aufgebracht werden, beispielsweise einem Wälzlager. Wälzlager selbst sind meist in im wesentlichen geschlossenen Lagergehäusen eingebaut und somit vollständig oder praktisch vollständig von metallischen Flächen umgeben, was bei elektromagnetischen Wellen zu Überlagerungen und in der Folge zu lokalen Auslöschungen und zu Empfangslücken führt. Empfangslücken sind für eine im wesentlichen stetige, oder am Umfang des drehenden Teils orientierte kontinuierliche oder durchgehende Messung des Belastungszustandes nachteilig.

Oberflächenwellen-Sensoren als SAW-Sensoren werden in ihrer Struktur der DE 42 17 049 (Siemens), zugehörigen Veröffentlichungen, wie Buff, "SAW-Sensors", Sensors and Actuators, A, 1992, Seiten 117 bis 121 sowie in einem erweiterten Anwendungsbereich beschrieben in einer Veröffentlichung aus "Ultrasonics Symposium", 1994, Seiten 589 bis 592, Autoren Schmidt, Sczesny, Reindl, Magori, dort insbesondere Seite 591, rechte Spalte zur Figur 6. Der Aufbau der SAW-Sensoren ist daraus bekannt, auch die Anregung dieser Sensoren über kurze Bursts von etwa 80 nsec Länge, um unerwünschte Echos aus der Umgebung zu vermeiden, wenn das reflektierte Signal nach einer Verzögerung von einigen Mikrosekunden zurückgeworfen wird. Die SAW-Sensoren sind in ähnlicher Bauweise auch bei Kraftfahrzeugen auf einer Welle angewendet worden, vgl. DE 198 47 291, dort Spalte 2, Zeile 45 ff., wobei allerdings pro Welle zwei Sensoren verwendet worden sind, von denen jeweils eine in einer von zwei Halbschalen angeordnet waren. Die gleichen Sensoren sind als Drehmomentaufnehmer auch in einer Dissertation beschrieben worden, vgl. Pistor, "Drehmomentaufnehmer mit Oberflächenwellen-Sensoren unter besonderer Berücksichtigung der Krafteinleitung", Lehrstuhl für elektrische Meßtechnik, TU-München, 28. Juni 1999, dort Bild 8.2 mit zugehöriger Beschreibung. Die Montage an einer dort angegebenen Motorwelle erfolgte durch eine Klebung in einem von dem Lager entfernten Einbauraum für den Aufnehmer. Weiterhin sind SAW-Sensoren als drahtlose passive Sensoren beschrieben worden, vgl. Reindl et al, "SAW-Devices as Wireless Passive Sensors", IEEE Ultrasonics Symposium, 1996, Seiten 363 bis 367. Dort wird auf mehrere Anwendungen von SAW-Sensoren verwiesen, vgl. Seite 367 unter Ziffer B mit zugehörigen Literaturhinweisen zur Packungstechnik (Referenzen 15,16), zur Anbringung auf drehbaren Wellen oder stark beanspruchten Antrieben (Referenzen 17,18) oder zur Erfassung eines Luftdrucks eines bewegbaren Fahrzeugs (dort Referenzen 14,16). Eine schließlich weitere Anwendung ist ein "funkabfragbarer Drehmomentsensor auf der Basis von Oberflächenwellen-Verzögerungsleitungen", Fortschritt-Berichte VDI, Reihe 8, Nr. 729, VDI-Verlag 1998. Ein rotierender Teil und ein stationärer Teil werden gemäß dortiger Ziffer 2.1.6 telemetrisch gekoppelt, wobei ein Dipolarray als Antenne in Betracht gezogen wird, vgl. Seite 84,85.

Die Erfindung geht von der technischen Problemstellung aus, eine mechanische Beanspruchung berührungslos an einem drehbaren Teil, wie einer Welle, messen zu können und dabei trotz des metallischen, im wesentlichen geschlossenen Lagergehäuses Empfangslücken zumindest herabzusetzen, bevorzugt in dem ausgewerteten Empfangssignal ganz zu vermeiden. Dabei soll nicht die Geometrie des Gehäuses oder des Lagers optimiert werden, sondern die Messung selbst, die dazuhin auf dem gesamten Drehwinkel von 360° zuverlässig arbeiten soll, bei kostengünstiger Auslegung und wenig aufwändiger Auswerteelektronik.

Gelöst wird diese Aufgabe mit zumindest zwei Empfangssignalen, die von zumindest zwei nicht mit dem rotierenden Teil drehbaren Antennen stammen. Diese Antennen sind dem Lagergehäuse zugeordnet und in ihm mit einem Abstand, bevorzugt umfänglich, angeordnet (Anspruch 12). Mit den beabstandet angeordneten zumindest zwei Antennen (Anspruch 20) können Empfangssignale zur Verfügung gestellt werden, die gemeinsam betrachtet eine Verbesserung oder Optimierung eines resultierenden Arbeitssignals ermöglichen, das am Umfang betrachtet, also bei einer Umdrehung des rotierenden Teils um 360°, zumindest keine vollständigen Empfangslücken aufweist (Anspruch 1).

Als Sensoren finden beispielsweise SAW-Sensoren Anwendung, die passiv mit Oberflächenwellen arbeiten und dabei eingestrahlte elektromagnetische Wellen zeitverzögert reflektieren bzw. zurücksenden. Es wird bei der Reflektion eine Laufzeit in den Sensoren ausgenutzt. Der Sensor wird dazu mit einem hochfrequenten Puls bestrahlt und dieser Puls wird über eine Antenne aufgenommen, in einem Interdigitalwandler in eine Oberflächenwelle umgesetzt und diese von Reflektorstellen auf dem Sensor zeitlich gestaffelt reflektiert, so daß sich Laufzeitunterschiede in den reflektierten mehreren Signalen ergeben. Dieser zumindest eine Laufzeitunterschied folgt aus den Abständen der Reflektorstellen auf dem Sensor. Die Reflektionssignale geben durch ihren Laufzeitunterschied eine geometrische Länge wieder, Änderungen dieser Laufzeit (des Abstandes der beiden Reflektionssignale) ergeben eine mechanische Dehnung des Sensors. Aus dieser Dehnung kann eine mechanische Beanspruchung des drehbaren Teils ermittelt werden, auf dem der Sensor fest aufgebracht ist. Während eine mechanische Belastung eine Dehnung oder Kontraktion bewirkt (Anspruch 10), ist eine thermische Belastung wesentliche Ursache für eine Änderung der Phasengeschwindigkeit der Oberflächenwelle auf dem SAW-Sensor, wodurch sich ebenfalls die Laufzeit ändert (zwischen der jeweiligen Reflektorstelle und dem Umsetzer als Interdigitalwandler). Damit ergibt sich eine lastabhängige oder temperaturabhängige Signalgröße als Ausgangsgröße des passiven Sensors, der auch als Sender angesehen werden kann, bezogen auf das reflektierte Signal. Diese Abhängigkeit von der physikalischen Einflußgröße sorgt für ein "passives Sendesignal" des Sensors, das im Vergleich zu dem Eingangssignal oder einem Referenzsignal konstanter Phase zu einer berührungslosen Meßmöglichkeit führt.

Obwohl geringe Änderungen nicht unmittelbar über die Laufzeit gemessen werden können, können sie über eine relative Phasenmessung zwischen dem jeweils reflektierten Signal und einer Frequenz eines Referenzoszillator ermittelt werden.

Die mechanische Belastung auf dem rotierenden Teil verändert die Geometrie des (passiven) Sensors, der durch Dehnung oder Kontraktion (Anspruch 13, Anspruch 17) eine Veränderung der reflektierten Signale hervorruft, die von den mehreren Empfangsantennen und einer nachgeschalteten Auswerteelektronik berührungslos gemessen werden kann (Anspruch 1). Die zumindest zwei, bevorzugt nur zwei Empfangssignale werden dabei einer der Auswerteschaltung vorgelagerten Signalstufe zugeführt, die beide Signale entweder zusammenfaßt (Anspruch 4, zweite Alternative) oder diese Signale so umschaltet, daß immer ein ausreichendes Empfangssignal für die anschließende Auswertung dieses Signals zur Verfügung steht (Anspruch 4, erste Alternative sowie Anspruch 7).

Beide Signale werden dabei zur Bestimmung der mechanischen Beanspruchung des rotierenden Teils herangezogen, aber nicht zwingend gleichzeitig, sondern bevorzugt zeitversetzt, entsprechend einer mechanischen Drehbewegung des rotierenden Teils (Anspruch 11, Anspruch 21). In einer möglichen Auswahl eines Maximalwertes kann das jeweils günstigere Empfangssignal zu einem Arbeitssignal werden, das als Grundlage der Belastungsmessung dient (Anspruch 10, Anspruch 16). Dazu wird nur eine Auswerteelektronik benötigt (Anspruch 15), die mit dem (einen) Arbeitssignal die Auswertung übernimmt.

Die mögliche Umschaltung zwischen beispielsweise zwei verfügbaren Signalen, die eigenständig jeweils Empfangslücken, Auslöschungen oder Feldstärkeeinbrüche besitzen, kann an einem Schwellenwert orientiert werden (Anspruch 8). Dabei wird das aktive Empfangssignal, das während der Messung oberhalb des Schwellenwerts liegt, zur Auswertung und Bestimmung der insbesondere mechanischen Belastung herangezogen. Unterschreitet dieses aktive Empfangssignal den Schwellenwert, wird das bis dahin passive Empfangssignal, das parallel zwar zur Verfügung steht, aber nicht aktiv ausgewertet wird, zur Auswertung herangezogen.

Der Schwellenwert kann adaptiv sein, kann also angepaßt oder nachgeführt werden (Anspruch 14).

Übergeordnet betrachtet, werden die Antennen so angeordnet, daß nicht beide Antennen gleichzeitig ein Empfangssignal abgeben, das ein Minimum oder eine Empfangslücke aufweist (Anspruch 5,6). Eine sinngemäße Gegenläufigkeit der Empfangssignale empfiehlt sich, wobei ein Signal ansteigt, wenn das andere Signal abfällt. Ganz bevorzugt kann Minimum und Maximum der beiden Signale im wesentlichen aufeinander abgestimmt werden, was aber stark von der nicht deterministischen Gehäusegeometrie des Lagers abhängt.

Bevorzugt wird ein drehbares Teil als Welle ausgebildet und von einem Wälzlager beispielsweise einem Stehlager gehalten (Anspruch 3). Die feste Anordnung des Sensors ist dabei auf der Welle als rotierendem Teil so zu verstehen, daß eine mechanische Dehnung oder thermische Belastung der Welle auf den Sensor übertragen wird, so daß sein Zustand über die Laufzeit der Oberflächenwellen mit reflektierten elektromagnetischen Wellen von der Gehäuseseite aus gemessen werden kann.

Der elektromagnetische Puls kann beispielsweise von einer der beiden oder mehreren Antennen, die als Empfangsantennen auch arbeiten können, eingestrahlt werden. Das Einstrahlen des Pulses auf den Sensor sorgt für eine Reflektion und eine Aufteilung des Frequenzpulses in mehrere elektrische Signale, die von den mehreren, räumlich beabstandeten Empfangsantennen abgegeben werden (Anspruch 19). Bevorzugt ist das elektromagnetische Signal ein gepulstes Hochfrequenzsignal (Anspruch 18), das vom Sensor reflektiert wird (Anspruch 9).

Durch das beschriebene Umschalten zwischen den zumindest zwei Antennen können die Empfangslücken oder durch stehende Wellen sich ergebenden Auslöschungen für die Messung beseitigt werden. Obwohl die konkreten Wirkungen der Überlagerungen in einem spezifischen Lagegehäuse nicht bekannt sind, arbeitet die Meßeinrichtung zuverlässig, unabhängig von einer konstruktiven oder destruktiven Überlagerung (Erhöhung bzw. Reduktion der Signalintensität durch Reflektionen der elektromagnetischen Wellen).

Außerdem tritt im Lagergehäuse - anders als bei offen liegenden Lagern - eine Abschattung durch die Welle nicht ein, welche meist über das Lager hinaussteht.

Ausführungsbeispiele erläutern und ergänzen die Erfindung.
- **Figur 1**: ist in Stirnansicht ein erstes beispielhaftes Wälzlager 5 als Stehlager mit einer drehbaren Welle 1 und zwei Empfangsantennen A1, A2 zur Veranschaulichung eines ersten Beispiels des Meßverfahrens und eines ersten Beispiels des Meßaufbaus.
- **Figur 1a**: ist eine Schnittansicht längs der Ebene II-II.
- **Figur 2**: ist eine Feldstärkeverteilung in einem Lagergehäuse für zwei versetzt angeordneten Antennen, mit einem ersten Signal a1 der ersten Antenne und einem zweiten Signal a2 der zweiten Antenne. Beide Signale sind in ihrer Signalamplitude winkelabhängig, wobei ein Drehwinkel von 360° angenommen wird, über den die Messung zuverlässig arbeiten soll.
- **Figur 3**: ist eine resultierende Feldstärkeverteilung, wie sie sich aus einer Zusammensetzung oder Zusammenstellung der beiden gezeigten einzelnen Signale a1 und a2 als ein resultierender Verlauf a3 ergibt, der ebenfalls winkelabhängig ist.

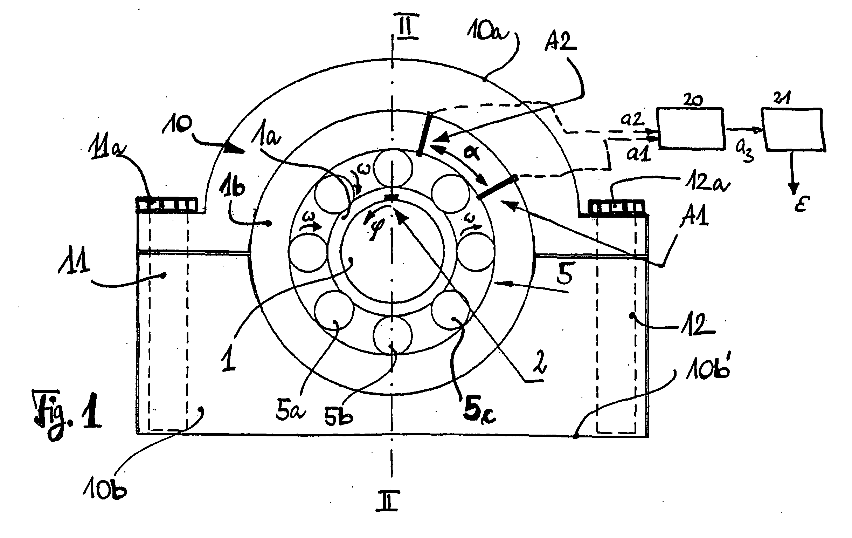

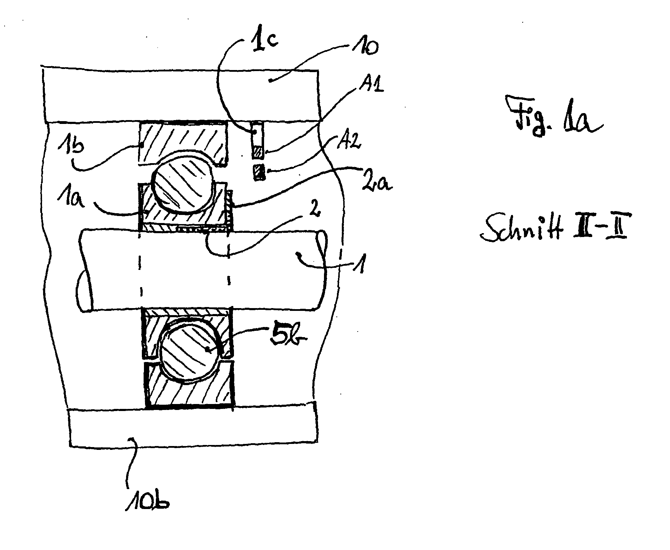

**Figuren 1** **und** **1a** veranschaulichen eine schematische Ansicht eines Lagers. Ein Lagergehäuse 10 hat einen oberen, der Form des Lagers 5 folgenden gewölbten Abschnitt 10a und einen Sockelabschnitt 10b mit Boden 10b'. Zwei Lagerbauteile können über Schraubmontagen 11, 12 mit Schraubköpfen 11a, 12a lösbar miteinander verbunden sein, so daß eine Lagerschale 1 b mehrere Wälzkörper 5a, 5b, 5c ... (beispielsweise als Kugeln oder Zylinder) trägt, die eine drehbare Welle 1 stützen. Die lagernden Wälzkörper 5a,5b,5c, ... sind zwischen einem Lagerinnenring 1a und einem Außenring 1 b als Schale angeordnet. Der Innenring 1a ist auf der Welle 1 fest angeordnet, beispielsweise durch ein thermisches Aufschrumpfen. Der Außenring stützt die Wälzkörper. Das dargestellte Lager kann auch als ein Stehlager mit zugehörigem Gehäuse bezeichnet werden.

Die Drehbewegung der Welle ist durch eine Rotation ω der einzelnen Wälzkörper 5a, 5b etc. (kurz: 5) symbolisiert und die Welle 1 ist mit einem Drehwinkel ϕ bezeichnet, der den Momentanwert des Drehwinkels ϕ(t) des Sensors 2 angibt, wobei 0° ≤ ϕ ≤ 360° ist.

Die Wälzkörper 5a, 5b, ... sind in im wesentlichen gleichen Abständen orbital um die Welle 1 angeordnet. Der Sensor 2, der im Beispiel ein SAW-Sensor zur Reflektion von elektromagnetischen Oberflächenwellen ist, ist fest auf der Welle 1 angeordnet und mit dem Lagerring 1 a verbunden, daß mechanische Veränderungen innerhalb der Welle oder des Lagerrings, wie Dehnungen, Spannungen oder Kontraktionen, auf ihn übertragen werden und ihn dabei selbst mechanisch entsprechend der Belastung verändern.

Nicht drehbar und im Abstand von dem Sensor 2 angeordnet, sind zwei Antennen A1, A2, die einen umfänglichen Abstand α besitzen. Beide Antennen sind elektrisch verbunden über jeweils eine Leitung mit einer Auswerteelektronik, die aus einer Schaltungseinheit 20 und einer Auswerteeinheit 21 besteht. Die Auswerteeinheit 21 gibt ein Signal ε (epsilon) ab, das repräsentativ für die mechanische oder thermische Belastung der Welle 1 an der Stelle ist, an welcher der Sensor 2 auf ihr fest angeordnet ist. Es handelt sich mithin um eine berührungslose Messung der mechanischen Belastung des drehbaren Teils. Es versteht sich, daß ε(ϕ) eine Abhängige von dem Drehwinkel der Welle ebenso sein kann, wie auch zeitabhängig ε(t), wenn die Welle eine Antriebswelle oder eine Abtriebswelle ist, die ein Drehmoment überträgt oder aufbringt.

Aus der axialen Schnittansicht II-II ist die Anordnung des Sensors 2 zu erkennen, der an der Welle vorgesehen ist und sich axial auf einer Teillänge des Innenrings 1a erstreckt, mit einer im wesentlichen senkrecht dazu angeordneten Antenne 2a. Auf der selben Seite des Lagers sind auch im axialen Abstand zwei Empfangsantennen A1 und A2 an einem Trägerstück 1c vorgesehen, von welchen Antennen eine als Sendeantenne auch verwendet werden kann.

Das an der Anordnung beschriebene Verfahren reduziert Empfangslücken und gewährleistet, daß bei jeder Winkelstellung des Lagers, entsprechend jeder Winkelstellung der Welle 1, der Sensor abgetastet (ausgewertet) werden kann, ohne eine zusätzliche Auswerteelektronik, vielmehr wird lediglich eine Auswerteelektronik 21 eingesetzt, verbunden mit einer Schaltungsanordnung 20, die im folgenden beschrieben wird. Damit kann die Beanspruchung des Lagers, insbesondere der Welle 1, durchgehend (zeitlich und/oder vom Drehwinkel her gesehen) ermittelt werden. Diese Ermittlung ist eine berührungslose Messung, sie kann auch als eine Bestimmung der mechanischen Belastung angesehen werden. Ebenso ist eine thermische Messung möglich, wie auch die Kombination von beiden.

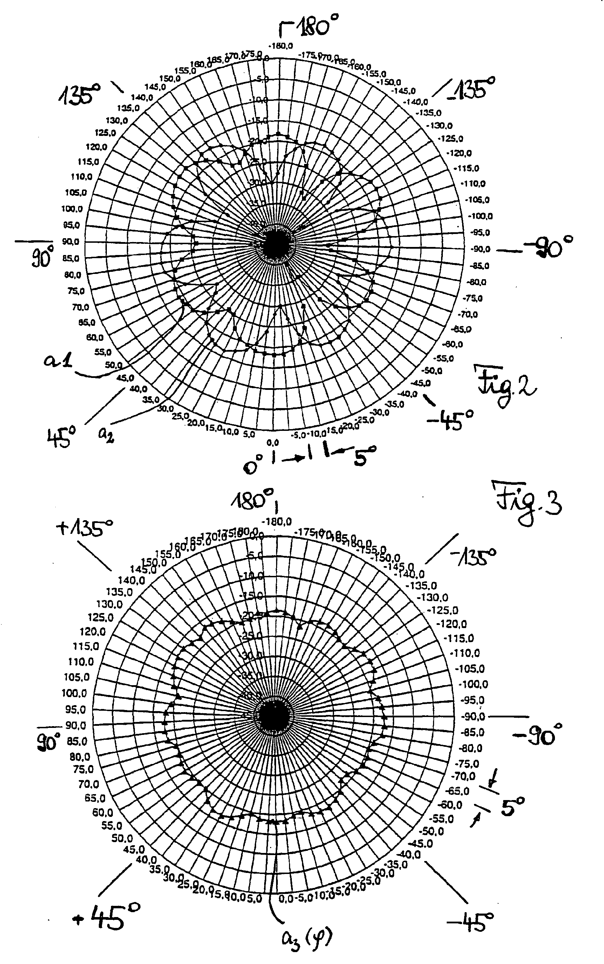

In das Lagergehäuse 10 sind im oberen Abschnitt 10a zwei Antennen eingebracht, deren Abstand so gewählt ist, daß sich eine Antenne in einem Feldstärkemaximum befindet, während die andere Antenne hinsichtlich ihres Empfangssignals eine Empfangslücke aufweist. Dazu kann auf Figur 2 verwiesen werden, aus der die beiden Empfangssignale a1, a2 abhängig vom Drehwinkel des Sensors 2 hervorgehen. Diese sind nicht in Gleichphase, sondern sinngemäß in einer Gegenphase, wobei ein Maximum und ein Minimum so einander zugeordnet sind, daß beide Feldstärkeverläufe über den Drehwinkel nie gleichzeitig ein Minimum besitzen.

Durch ein Umschalten der beiden Signale a1, a2 kann sichergestellt werden, daß ein Arbeitssignal a3 gebildet wird, das aus **Figur 3** hervorgeht. Dieses Arbeitssignal a3 ist ebenfalls abhängig vom Drehwinkel ϕ und zeigt einen viel gleichmäßigeren Verlauf hinsichtlich der Signalstärke, als jeweils ein Einzelsignal a1 oder a2. Die Umschaltung verwirklicht die Schaltungsanordnung 20, der beide Signalverläufe a1, a2 gleichzeitig zur Verfügung stehen, die aber nur eines davon als Arbeitssignal a3 an die Auswerteschaltung 21 weitergibt.

Eine gleichmäßigere Empfangsfeldstärke wird damit der Auswertung unterworfen, so daß ein zuverlässigerer Belastungswert ε(ϕ) oder ε(t) erhalten wird.

Während sich das Lager und mit ihm der Sensor 2 dreht, wandern Feldstärkeminimas über die fest positionierten Empfangsantennen A1, A2 hinweg. Eine dieser beiden Antennen A1 oder A2 kann gleichzeitig eine Sendeantenne sein, zur Ausstrahlung eines Hochfrequenzpulses, der von dem Sensor 2 reflektiert wird. Die reflektierten Signale werden von den zwei um α beabstandeten Antennen an unterschiedlichen Orten aufgenommen und bilden zwei eigene elektrische Empfangssignale a1, a2, die aufgrund der räumlichen Beabstandung der Antennen vom Wesen her zumeist nicht gleich sind. Diese beiden Empfangssignale bilden dann über die Schaltungsanordnung 20 das Arbeitssignal, aus dem der zu messende Belastungswert errechnet werden kann.

Die Empfangsqualität ist nicht mehr allein von einer Antenne und ihrer Anordnung abhängig, sondern beide Antennen können so positioniert werden, daß die beiden Empfangssignale als Folge der reflektierten Pulse zur Bestimmung der Dehnung in Zusammenschau gesehen nicht mehr gestört sind.

Als umfänglicher Abstand α können Winkel zwischen 15° und 90°, insbesondere im Bereich zwischen 20° und 45° Verwendung finden, wie an Figur 1 gezeigt. Winkel unter 90° sind bevorzugt. Hinsichtlich der Dauer des Hochfrequenzpulses, der aus Hochfrequenzanteilen zusammengesetzt ist, können die Zeiten auf das Lagergehäuse abgestimmt werden. Der Hochfrequenzpuls, der auch als "Interrogationspuls" bezeichnet wird, ist in seiner zeitlichen Länge auf den Abstand der Reflektoren auf dem Sensor abgestimmt. Die Länge des Pulses sollte nur maximal die Hälfte des minimalen zeitlichen Abstandes zweier benachbarter Reflektoren auf dem Sensor sein. Ansonsten kann es zu Überlagerungen des hinlaufenden Sendepulses mit dem reflektierten Antwortpuls geben. Beispielsweise beträgt der minimale zeitliche Abstand zweier Reflektoren 160 nsec. Damit ergibt sich eine maximale Pulslänge von im Wesentlichen 80 nsec. Die Impulslänge kann auch so gewählt sein, das die wesentlichen Echosignale der Umgebung abgeklungen sind, bevor mit dem Reflektionssignal des SAW-Sensors gerechnet wird, das von seiner Antenne 2a abgegeben wird.

Weitere Empfangsantennen, die nicht grafisch eingezeichnet sind, können hinzutreten, die ihre Empfangssignale dann auch der Schaltungsanordnung 20 zuführen, die aus den dann zur Verfügung stehenden mehr als zwei Empfangssignalen das qualitativ Stärkste als Arbeitssignal a3 auswählt oder sie anderweitig kombiniert.

Der Umschaltpunkt, zu dem ein Wechsel in der Schaltungsanordnung 20 vorgenommen wird, zwischen dem ersten Empfangssignal a1 und dem zweiten Empfangssignal a2, kann von einem Schwellenwert abhängig gemacht werden. Die Welle respektive das Lager können unterschiedliche Drehgeschwindigkeiten aufweisen.

Eine Ankopplung an einen Lageregler soll nicht erfolgen, so daß der Umschaltzeitpunkt von der ersten Antenne auf die zweite Antenne, bzw. das jeweilige elektrische Empfangssignal selbst zu ermitteln ist, also aus den Signalen selbst, deren Signalhöhe oder deren Verlauf.

Der Umschaltzeitpunkt wird aus zumindest einem der Empfangssignale a1(t) oder a2(t) selbst bestimmt.

Bei der Bestimmung des Arbeitssignals a3(t) können auch andere Verfahren Anwendung finden, die in der Schaltungsanordnung 20 realisiert werden.

So können die Signalamplituden der Empfangssignale verglichen werden. Unterschreitet der Signalverlauf des gerade aktiven Empfangssignals einen fest So können die Signalamplituden der Empfangssignale verglichen werden. Unterschreitet der Signalverlauf des gerade aktiven Empfangssignals einen fest vorgegebenen Wert, kann auf das Empfangssignal der anderen Antenne umgeschaltet werden. Das gerade aktive Signal ist dasjenige, das das Arbeitssignal a3 bildet, während das andere Empfangssignal zunächst passiv ist und nur zu Vergleichszwecken dient. Wird allerdings der fest vorgegebene Wert verwendet, braucht ein Vergleich nur des gerade aktiven Signals mit dem Schwellenwert vorgenommen werden.

Die Vorgabe des Schwellenwertes ist einbauabhängig und von Wälzlager zu Wälzlager verschieden. Er kann beim Einbau bestimmt werden, ober aber das System wird lernfähig gemacht, wobei sich die Schaltungsanordnung 20 eine Schaltschwelle eigenständig sucht und vorteilhaft sogar selbsttätig nachführt.

Mit diesem Verfahren wird eine gleichmäßigere Empfangsqualität bei maximaler Anzahl von verwertbaren Empfangspulsen sichergestellt, die von der Sendeantenne ausgehen, von dem Sensor 2 reflektiert werden und dann als Reflektionssignale in Empfangssignale an den einzelnen Antennen umgesetzt werden.

Eine weitere Variante der Arbeitsweise der Schaltung 20 zur Heranziehung mehrerer als nur einem Antennensignal, liegt in der Abwechslung. Es wird abwechselnd ein Puls mit der Antenne A1 und anschließend mit der Antenne A2 empfangen und der stärkste Wert wird als Arbeitssignal a3 für die weitere Verarbeitung mit der Auswerteschaltung 21 herangezogen. Dabei wird ein Puls von einer Sendeantenne aktiviert, die beispielsweise die Antenne A1 ist, um mit der Antenne A2 das Empfangssignal aus dem vom Sensor 2 reflektierten Signal zu bilden. Dieses Empfangssignal wird in seiner Amplitude oder Signalstärke gespeichert. Mit einem danach aktivierten zweiten Sendesignal von beispielsweise der anderen Antenne A2 aus, wird das entsprechende Empfangssignal der ersten Antenne A1 von der Schaltung 20 ebenfalls gemessen und mit der Signalstärke des zuvor gemessenen Signals verglichen. Das stärkere Signal wird zur Auswertung herangezogen. Dabei geht die Hälfte der anfallenden Informationen bzw. Pulse verloren, aber das System ist sicher, daß immer der bessere Wert der zwei oder auch mehreren Empfangssignale zur Verfügung steht, wenn mehrere beabstandete Antennen und dementsprechend mehrere Empfangssignale eingesetzt werden.

Die Antennen werden dabei kreuzweise abwechselnd als Sende- bzw. Empfangsantenne verwendet.

Eine weitere Variante liegt darin, abwechselnd einen Puls mit der Antenne A1 und anschließend einen Puls mit der Antenne A2 zu empfangen. Die beiden Signalwerte des Empfangssignals werden je nach Empfangsfeldstärke gewichtet und zusammengefaßt, insbesondere aufsummiert. Hier werden alle gesendeten Impulse in Empfangsimpulse umgesetzt und ausgewertet, aber der Informationsgehalt einiger Pulse mag qualitativ nicht so hochwertig sein, was in der Summe ein nicht so gutes Ergebnis ergibt, wie das als erstes beschriebene Verfahren, bei der die Signalamplitude mit einem Schwellenwert verglichen wurde.
Das abwechselnde Empfangen kann auch in ein gemeinsame Empfangen gewandelt werden, bei dem eine gesonderte Sendeantenne noch hinzugenommen wird, deren Hochfrequenz-Sendepuls von beiden Empfangsantennen A1, A2 in zwei gleichzeitig anstehende Empfangssignale a1, a2 umgesetzt wird.

Bei der Bestimmung der mechanischen Veränderung des Sensors, beispielsweise der SAW-Sensordehnung, wird die Phase des reflektierten Pulses durch Bestimmung eines In-Phase- und eines Quadraturwertes des Trägersignals ausgewertet. Diese Information kann auch für die Bestimmung der Signalamplitude Verwendung finden, welche Signalamplitude gemäß den oben beschriebenen Beispielen zur Bestimmung des Arbeitssignals a3 und/oder zur Bestimmung eines Schwellenwerts herangezogen wird.

## Patentansprüche

1. Verfahren zur Messung von insbesondere mechanischen Belastungen oder Beanspruchungen eines rotierenden Teils (1,1a) in einem im wesentlichen geschlossenen metallischen Gehäuse (10;10a,10b) für ein Lager; wobei der rotierende Teil (1,1a) einen Sensor (2) trägt, der elektromagnetische Wellen reflektiert und seine Eigenschaft aufgrund der Beanspruchung oder Belastung des rotierenden Teils (1,1a) meßbar verändert; wobei zwei, reflektierte Signale des Sensors (2) empfangende Antennen (A1;A2) relativ zum Sensor undrehbar und beabstandet (α) im Gehäuse (10) angeordnet sind, und diese Antennen elektrische Empfangssignale (a1,a2) abgeben, welche einer Auswerteelektronik (20,21) zugeführt werden, um beide Empfangssignale (a1,a2) zu einer Bestimmung der Belastung oder Beanspruchung des rotierenden Teils (1) heranzuziehen.

2. Verfahren nach Anspruch 1, wobei der Sensor fest auf dem rotierenden Teil (1,1a) aufgebracht wird und sich mit diesem meßbar verformt.

3. Verfahren nach Anspruch 1, wobei das rotierende Teil (1,1a) im Gehäuse (10) drehbar gelagert ist (5a,5b,5c,...), insbesondere als eine Welle auf einem Wälzlager (5) in dem Lagergehäuse.

4. Verfahren nach Anspruch 1, wobei die Belastung oder Beanspruchung des rotierenden Teils
(i) über die mechanische Verformung des Sensors entweder aus dem einen Empfangssignal (a1) oder dem anderen Empfangssignal (a2) bestimmt wird;
oder
(ii) aus einer Zusammenlegung (a3) der beiden Empfangssignale (a1,a2) ermittelt wird.

5. Verfahren nach Anspruch 1, wobei die beiden Antennen (A1,A2) so beabstandet, insbesondere umfänglich versetzt (α) angeordnet sind, daß aufgrund reflektierter Signale des Sensors (2) ein erstes Empfangssignal (a1) von der einen Antenne (A1) ansteigt, wenn ein zweites Empfangssignal (a2) von der zweiten Antenne (A2) abfällt.

6. Verfahren nach Anspruch 5, wobei ein Minimum des ersten Empfangssignals in der ersten Antenne im wesentlichen bei einem Maximum des zweiten Empfangssignals (a2) der zweiten Antenne liegt, bei einer gleichen Winkellage (ϕ) des rotierenden Teils, insbesondere des Sensors (2) auf dem rotierenden Teil (1,1a).

7. Verfahren nach Anspruch 1 oder 4, wobei die Auswerteelektronik (20,21) zwischen den beiden Empfangssignalen (a1,a2) umschaltet, um zu einem ersten Zeitbereich das erste (a1) und zu einem späteren Zeitbereich das zweite Signal (a2) zur Messung der Beanspruchung auszuwerten.

8. Verfahren nach Anspruch 7, wobei die Umschaltung im wesentlichen dann erfolgt (20), wenn das derzeit gemessene (aktive) Empfangssignal (a1) unter einen Schwellenwert fällt, insbesondere unter eine Signalstärke, die das zweite, noch nicht ausgewertete (bislang passive) Empfangssignal (a2) der zweiten Antenne (A2) besitzt.

9. Verfahren nach Anspruch 1, wobei der Sensor (2) ein passiver Sensor ist, der elektromagnetische Wellen aufnimmt, durch eine Laufzeit verzögert und reflektiert, insbesondere ein SAW-Sensor zur Reflektion von Oberflächenwellen, die von einer Antenne (A1,A2) insbesondere als ein Puls hoher Frequenzanteile eingestrahlt werden.

10. Verfahren nach Anspruch 9, wobei der Sensor mehrere Reflektorstellen aufweist, die auf dem Sensor beabstandet angeordnet sind und einen einfallenden Hochfrequenz-Puls nacheinander reflektieren, um durch zumindest eine Laufzeit der Welle zwischen einer der Reflektionsstellen und der Umsetzstelle ein belastungs-abhängiges oder temperatur-abhängiges reflektiertes Signal zu erhalten, welches es über eine Phasenmessung ermöglicht, Aufschluß über die Beanspruchung des drehbaren Teils (1) zu erhalten.

11. Verfahren nach Anspruch 1, wobei die Messung während eines Drehens (ω) des drehbaren Teils (1) erfolgt.

12. Vorrichtung zur Bestimmung von Belalstungen eines rotierenden Teils (1,1a) in einem im wesentlichen geschlossenen metallischen Lagergehäuse (10;10a,10b), wobei der rotierende Teil einen Sender (2) trägt, der elektromagnetische Wellen reflektiert und aufgrund einer Belastung des rotierenden Teils (1,1a) meßfähig verformbar ist; und wobei zwei - reflektierte Signale des Senders (2) empfangende - Antennen (A1,A2) relativ zum Sender unverdrehbar und beabstandet (α) im Lagergehäuse (10) angeordnet sind, um zumindest zwei Empfangssignale (a1,a2) an eine Auswerteelektronik (20,21) abzugeben, in der beide Empfangssignale (a1,a2) - gemeinsam oder alternativ - zu einer Bestimmung der Belastung des Teils (1,1a) auswertbar sind.

13. Vorrichtung nach Anspruch 12, wobei als eine mechanische Verformung des Senders oder Sensors (2) seine Dehnung oder Kontraktion über die aus den reflektierten Signalen gebildeten Empfangssignale (a1,a2) der beiden Antennen (A2,A1) durch Auswertung eines In-Phase- und eines Quadraturwertes der Empfangssignale bestimmbar ist.

14. Verfahren nach Anspruch 7, wobei ein Schwellenwert zur Umschaltung aus zumindest einem der gemessenen Empfangssignale (a2,a1) ermittelt wird, insbesondere eigenständig nachgeführt wird.

15. Vorrichtung nach Anspruch 12, wobei nur eine Auswerteelektronik (20,21) für beide Empfangssignale der beiden Antennen (A1,A2) vorgesehen ist.

16. Vorrichtung nach Anspruch 12, wobei ein thermischer Einfluß auf den Sensor (2) messbar ist, welcher eine gleiche thermische Belastung oder Beanspruchung des rotierenden Teils (1,1a) repräsentiert.

17. Verfahren nach Anspruch 1, wobei eine mechanische Belastung oder Beanspruchung des drehbaren Teils (1,1a) gemessen wird, als Folge einer mechanischen Veränderung, wie Dehnung oder Stauchung des Sensors (2).

18. Verfahren nach Anspruch 1, wobei das elektromagnetische Signal ein gepulstes Hochfrequenzsignal ist.

19. Verfahren nach Anspruch 1 oder 18, wobei zumindest eine der beiden Antennen (A1,A2) als eine Sendeantenne für die elektromagnetischen Wellen, insbesondere den Hochfrequenz-Puls verwendet wird, um von dem Sender oder Sensor (2) für beide Antennen als Reflektionssignal zur Bildung mehrerer Empfangssignale reflektiert zu werden.

20. Vorrichtung nach Anspruch 12, wobei mehr als zwei nicht drehbare Antennen zum Empfang der reflektierten Signale des passiven Senders oder Sensors (2) vorgesehen sind, um ihre aus dem zumindest einen reflektierten Signal gebildeten mehreren Empfangssignale der einen Auswerteelektronik (20) zur Auswertung zuzuführen.

21. Vorrichtung nach Anspruch 12, wobei aus den zumindest zwei Empfangssignalen von einer Maximalwertschaltung (20) ein Arbeitssignal (a3) als jeweiliger Maximalwert der beiden einzelnen Empfangssignale bildbar ist, um es an eine Auswerteschaltung (21) weiter zu leiten.

22. Verfahren nach Anspruch 1, wobei als eine mechanische Verformung des Senders oder Sensors (2) seine Dehnung oder Kontraktion über die aus den reflektierten Signalen gebildeten Empfangssignale (a1,a2) der beiden Antennen (A2,A1) durch Auswertung eines In-Phase- und eines Quadraturwertes der Empfangssignale bestimmt wird.

23. Verfahren nach Anspruch 1, wobei ein thermischer Einfluß auf den Sensor (2) gemessen wird, welcher eine gleiche thermische Belastung oder Beanspruchung des rotierenden Teils (1,1a) repräsentiert.

24. Verfahren nach Anspruch 1, wobei mehr als zwei nicht drehbare Antennen zum Empfang der reflektierten Signale des passiven Senders oder Sensors (2) ihre aus dem zumindest einen reflektierten Signal gebildeten mehreren Empfangssignale der einen Auswerteelektronik (20) zur Auswertung zuführen.

25. Verfahren nach Anspruch 1, wobei aus den zumindest zwei Empfangssignalen von einer Maximalwertschaltung (20) ein Arbeitssignal (a3) als jeweiliger Maximalwert der beiden einzelnen Empfangssignale gebildet wird, welcher an eine Auswerteschaltung (21) weitergeleitet wird.

## Claims

1. Process for measuring in particular mechanical stresses or strains of a rotating part (1, 1a) in an essentially closed metallic housing (10; 10a, 10b) for a bearing; wherein the rotating part (1, 1a) carries a sensor (2) which reflects electromagnetic waves and measurably changes its property due to the strain or stress of the rotating part (1, 1a); wherein two antennae (A1; A2) receiving reflected signals of the sensor (2) are arranged to be non-rotatable relative to the sensor and spaced (α) in the housing (10), and these antennae emit electrical receiving signals (a1, a2) which are supplied to evaluating electronics (20, 21) to use both receiving signals (a1, a2) for determination of the stress or strain of the rotating part (1).

2. Process according to claim 1, wherein the sensor is applied firmly to the rotating part (1, 1a) and is deformed measurably with the latter.

3. Process according to claim 1, wherein the rotating part (1, 1a) is mounted (5a, 5b, 5c, ...) to be rotatable in the housing (10), in particular as a shaft on a roller bearing (5) in the bearing housing.

4. Process according to claim 1, wherein the stress or strain of the rotating part
(i) is determined via the mechanical deformation of the sensor either from the one receiving signal (a1) or the other receiving signal (a2);
or
(ii) is ascertained from a combination (a3) of the two receiving signals (a1, a2).

5. Process according to claim 1, wherein the two antennae (A1, A2) are arranged to be spaced, in particular peripherally offset (α), so that due to reflected signals of the sensor (2), a first receiving signal (a1) from the one antenna (A1) rises when a second receiving signal (a2) from the second antenna (A2) falls.

6. Process according to claim 5, wherein a minimum of the first receiving signal in the first antenna lies essentially at a maximum of the second receiving signal (a2) of the second antenna, for the same angular position (ϕ) of the rotating part, in particular of the sensor (2) on the rotating part (1, 1a).

7. Process according to claim 1 or 4, wherein the evaluating electronics (20, 21) switch between the two receiving signals (a1, a2) to evaluate at a first time range, the first (a1) and at a later time range, the second signal (a2) to measure the strain.

8. Process according to claim 7, wherein switching is effected (20) essentially when the currently measured (active) receiving signal (a1) falls below a threshold value, in particular below a signal strength which the second, not yet evaluated (hitherto passive) receiving signal (a2) of the second antenna (A2) has.

9. Process according to claim 1, wherein the sensor (2) is a passive sensor which detects electromagnetic waves, delays them by a transit time and reflects them, in particular a SAW sensor for reflection of surface waves which are beamed in by an antenna (A1, A2) in particular as a pulse of high frequency components.

10. Process according to claim 9, wherein the sensor has several reflector points which are arranged at a distance on the sensor and successively reflect an incident highfrequency pulse to obtain a stress-dependent or temperature-dependent reflected signal due to at least one transit time of the shaft between one of the reflection points and the conversion point and which signal makes it possible via a phase measurement to obtain information about the strain of the rotatable part (1).

11. Process according to claim 1, wherein the measurement is effected during rotation (ω) of the rotatable part (1).

12. Device for determining stresses of a rotating part (1, 1a) in an essentially closed metallic bearing housing (10; 10a, 10b), wherein the rotating part carries a transmitter (2) which reflects electromagnetic waves and can be deformed measurably due to a stress of the rotating part (1, 1a); and wherein two antennae (A1, A2) - receiving reflected signals of the transmitter (2) - are arranged to be non-rotatable relative to the transmitter and spaced (α) in the bearing housing (10) to emit at least two receiving signals (a1, a2) to evaluating electronics (20, 21) in which both receiving signals (a1, a2) - together or alternatively - can be evaluated for determination of the stress of the part (1, 1a).

13. Device according to claim 12, wherein its expansion or contraction can be determined as a mechanical deformation of the transmitter or sensor (2) via the receiving signals (a1, a2) of the two antennae (A2, A1) formed from the reflected signals by evaluation of an in-phase value and of a quadrature value of the receiving signals.

14. Process according to claim 7, wherein a threshold value is ascertained to switch from at least one of the measured receiving signals (a2, a1), in particular is tracked independently.

15. Device according to claim 12, wherein only one set of evaluating electronics (20, 21) is provided for both receiving signals of the two antennae (A1, A2).

16. Device according to claim 12, wherein a thermal influence on the sensor (2) can be measured which represents the same thermal stress or strain of the rotating part (1, 1a).

17. Process according to claim 1, wherein a mechanical stress or strain of the rotatable part (1, 1a) is measured as a consequence of a mechanical change, such as expansion or compression of the sensor (2).

18. Process according to claim 1, wherein the electromagnetic signal is a pulsed highfrequency signal.

19. Process according to claim 1 or 18, wherein at least one of the two antennae (A1, A2) is used as a transmitting antenna for the electromagnetic waves, in particular the highfrequency pulse to be reflected by the transmitter or sensor (2) for both antennae as a reflection signal for the formation of several receiving signals.

20. Device according to claim 12, wherein more than two non-rotatable antennae are provided for receiving the reflected signals of the passive transmitter or sensor (2) to pass their several receiving signals formed from the at least one reflected signal to the one set of evaluating electronics (20) for evaluation.

21. Device according to claim 12, wherein a working signal (a3) as a particular maximum value of the two individual receiving signals can be formed from the at least two receiving signals of a maximum value circuit (20) to convey it to an evaluating circuit (21).

22. Process according to claim 1, wherein as a mechanical deformation of the transmitter or sensor (2), its expansion of contraction is determined via the receiving signals (a1, a2) of the two antennae (A2, A1) formed from the reflected signals by evaluation of an in-phase value and of a quadrature value of the receiving signals.

23. Process according to claim 1, wherein a thermal influence on the sensor (2) is measured which represents the same thermal stress or strain of the rotating part (1, 1a).

24. Process according to claim 1, wherein more than two non-rotatable antennae for receiving the reflected signals of the passive transmitter or sensor (2) pass their several receiving signals formed from the at least one reflected signal to the one set of evaluating electronics (20) for evaluation.

25. Process according to claim 1, wherein a working signal (a3) as a particular maximum value of the two individual receiving signals is formed from the at least two receiving signals of a maximum value circuit (20) and which is conveyed to an evaluating circuit (21).

## Revendications

1. Procédé pour la mesure de sollicitations ou de contraintes en particulier mécaniques sur une pièce rotative (1,1a) dans un boîtier métallique essentiellement fermé (10; 10a, 10b) pour un palier, dans lequel la pièce rotative (1, 1a) porte un capteur (2), qui réfléchit des ondes électromagnétiques et qui modifie ses propriétés de manière mesurable en fonction de la contrainte ou de la sollicitation sur la pièce rotative (1, 1a), dans lequel deux antennes (A1; A2) recevant des signaux réfléchis du capteur (2) sont disposées dans le boîtier (10) de façon solidaire en rotation avec le capteur et espacées (α), et ces antennes génèrent des signaux de réception électriques (a1, a2) qui sont envoyés à une électronique d'évaluation (20, 21), afin d'exploiter les deux signaux de réception (a1, a2) en vue de la détermination de la sollicitation ou de la contrainte sur la pièce rotative (1).

2. Procédé selon la revendication 1, dans lequel le capteur est fixé solidairement sur la pièce rotative (1, 1a) et se déforme avec celle-ci de manière mesurable.

3. Procédé selon la revendication 1, dans lequel la pièce rotative (1, 1a) est montée de façon rotative (5a, 5b, 5c, ...) dans le boîtier (10), en particulier à la manière d'un arbre sur un palier de roulement (5) dans le boîtier de palier.

4. Procédé selon la revendication 1, dans lequel la sollicitation ou la contrainte sur la pièce rotative
(i) est déterminée au moyen de la déformation mécanique du capteur à partir soit d'un signal de réception (a1) soit de l'autre signal de réception (a2);
ou
(ii) est déterminée à partir d'une combinaison (a3) des deux signaux de réception (a1, a2).

5. Procédé selon la revendication 1, dans lequel les deux antennes (A1, A2) sont espacées, en particulier décalées en périphérie (α), de telle manière que, sur la base de signaux réfléchis du capteur (2), un premier signal de réception (a1) provenant d'une première antenne (A1) augmente lorsqu'un deuxième signal de réception (a2) provenant de la deuxième antenne (A2) diminue.

6. Procédé selon la revendication 5, dans lequel un minimum du premier signal de réception dans la première antenne se situe essentiellement à un maximum du deuxième signal de réception (a2) de la deuxième antenne, pour une même position angulaire (ϕ) de la pièce rotative, en particulier du capteur (2) sur la pièce rotative (1, 1a).

7. Procédé selon la revendication 1 ou 4, dans lequel l'électronique d'évaluation (20, 21) se commute entre les deux signaux de réception (a1, a2), afin d'évaluer le premier signal (a1) pendant une première période de temps et le deuxième signal (a2) pendant une deuxième période de temps, pour la mesure de la contrainte.

8. Procédé selon la revendication 7, dans lequel la commutation se produit essentiellement (20), lorsque le signal de réception (actif) mesuré à ce moment (a1) tombe sous une valeur de seuil, en particulier sous une intensité de signal que possède le deuxième signal de réception (a2) de la deuxième antenne (A2) qui n'est pas encore évalué (jusqu'alors passif).

9. Procédé selon la revendication 1, dans lequel le capteur (2) est un capteur passif, qui capte des ondes électromagnétiques, les retarde pendant une durée de trajet et les réfléchit, en particulier un capteur SAW pour la réflexion d'ondes de surface, qui sont émises par une antenne (A1, A2) en particulier sous la forme d'une impulsion de parties haute fréquence.

10. Procédé selon la revendication 9, dans lequel le capteur présente plusieurs zones de réflexion, qui sont disposées à distance sur le capteur et qui réfléchissent l'une après l'autre l'impulsion haute fréquence incidente, afin d'obtenir, par au moins une durée de trajet de l'arbre entre une des zones de réflexion et la zone de commutation, un signal réfléchi dépendant de la sollicitation ou dépendant de la température, qui permet, par une mesure de phase, d'obtenir une conclusion quant à la contrainte de la pièce rotative (1).

11. Procédé selon la revendication 1, dans lequel la mesure est effectuée pendant une rotation (ω) de la pièce rotative (1).

12. Dispositif pour la détermination de sollicitations dans une pièce rotative (1, 1a) dans un boîtier de palier métallique essentiellement fermé (10; 10a, 10b), dans lequel la pièce rotative porte un émetteur (2), qui réfléchit des ondes électromagnétiques et qui est déformable de manière mesurable par suite d'une sollicitation de la pièce rotative (1, 1a), et dans lequel deux antennes (A1, A2) - recevant des signaux réfléchis de l'émetteur (2) - sont disposées dans le boîtier de palier (10) de façon solidaire en rotation avec l'émetteur et espacées (α), afin d'envoyer au moins deux signaux de réception (a1, a2) à une électronique d'évaluation (20, 21), dans laquelle les deux signaux de réception (a1, a2) - en commun ou alternativement - peuvent être évalués pour une détermination d'une sollicitation sur la pièce (1, 1a).

13. Dispositif selon la revendication 12, dans lequel, sous la forme d'une déformation mécanique de l'émetteur ou du capteur (2), son allongement ou sa contraction peut être déterminée au moyen des signaux de réception (a1, a2) des deux antennes (A1, A2) formés à partir des signaux réfléchis, par l'évaluation d'une valeur en phase et d'une valeur en opposition de phase des signaux de réception.

14. Procédé selon la revendication 7, dans lequel une valeur de seuil pour la commutation à partir d'au moins un des signaux de réception mesurés (a2, a1) est déterminée, en particulier est ajustée de manière autonome.

15. Dispositif selon la revendication 12, dans lequel il n'est prévu qu'une seule électronique d'évaluation (20, 21) pour les deux signaux de réception des deux antennes (A1, A2).

16. Dispositif selon la revendication 12, dans lequel une influence thermique sur le capteur (2) est mesurable, laquelle représente une sollicitation ou une contrainte thermique identique sur la pièce rotative (1, 1a).

17. Procédé selon la revendication 1, dans lequel on mesure une sollicitation ou une contrainte mécanique sur la pièce rotative (1, 1a), à la suite d'une variation mécanique, comme un allongement ou une compression du capteur (2).

18. Procédé selon la revendication 1, dans lequel le signal électromagnétique est un signal à haute fréquence pulsé.

19. Procédé selon la revendication 1 ou 18, dans lequel on utilise au moins une des deux antennes (A1, A2) comme une antenne émettrice pour les ondes électromagnétiques, en particulier l'impulsion haute fréquence, pour être réfléchies par l'émetteur ou le capteur (2) pour les deux antennes comme signal de réflexion en vue de la formation de plusieurs signaux de réception.

20. Dispositif selon la revendication 12, dans lequel il est prévu plus de deux antennes non rotatives pour la réception des signaux réfléchis de l'émetteur ou du capteur passif (2), pour transmettre ses multiples signaux de réception formés à partir de l'au moins un signal réfléchi à une électronique d'évaluation (20) en vue de l'évaluation.

21. Dispositif selon la revendication 12, dans lequel un signal de travail (a3) peut être formé à partir des au moins deux signaux de réception par un circuit de valeur maximale (20) comme valeur maximale respective des deux signaux de réception individuels, afin de le transmettre à un circuit d'évaluation (21).

22. Procédé selon la revendication 1, dans lequel on détermine, sous la forme d'une déformation mécanique de l'émetteur ou du capteur (2), son allongement ou sa contraction au moyen des signaux de réception (a1, a2) des deux antennes (A1, A2) formés à partir des signaux réfléchis, par l'évaluation d'une valeur en phase et d'une valeur en opposition de phase des signaux de réception.

23. Procédé selon la revendication 1, dans lequel on mesure une influence thermique sur le capteur (2), laquelle représente une sollicitation ou une contrainte thermique identique sur la pièce rotative (1, 1a).

24. Procédé selon la revendication 1, dans lequel plus de deux antennes non rotatives pour la réception des signaux réfléchis de l'émetteur ou du capteur passif (2) envoient leurs multiples signaux de réception formés à partir de l'au moins un signal réfléchi à une électronique d'évaluation (20) pour l'évaluation.

25. Procédé selon la revendication 1, dans lequel on forme, à partir d'au moins deux signaux de réception au moyen d'un circuit de valeur maximale (20), un signal de travail (a3) comme valeur maximale respective des deux signaux de réception individuels, lequel est retransmis à un circuit d'évaluation (21).
